# EUROPEAN PATENT SPECIFICATION

(11) **EP 1 588 882 B1**
(45) Date of publication and mention of the grant of the patent: **23.01.2008**
(21) Application number: 04101603.1
(22) Date of filing: 19.04.2004
(51) Int. Cl.: B60J 7/057, F16H 37/08

(54) **Drive unit for movable parts of a vehicle roof assembly**
Antriebseinheit für beweglichen Teile einer Dachanordnung für ein Fahrzeug
Unité d'entrainement de parties mobiles d'un toit ouvrant de véhicule

(43) Date of publication of application: 26.10.2005
(73) Proprietor: Inalfa Roof Systems Group B.V., 5804 AH Venray (NL)
(72) Inventor: Nellen, Marcel, Johan, Christiaan, 5803 HL, Venray (NL); Van den Berge, Rob, Wietse, 7415 EX, Deventer (NL)
(74) Representative: Metman, Karel Johannes

(56) References cited:
- DE-A- 4 318 481
- DE-C- 10 238 440
- US-A1- 2001 035 062

## Description

The invention relates to a drive unit according to the preamble of claim 1.

Drive units are known in the prior art, these drive units comprise an electric motor for each part to be moved. These electric motors require a lot of space and are relatively expensive.

A drive unit according to the preamble of claim is known from DE 43 18 481 A1. This document discloses a drive unit having an electric motor and transmission mechanism including two output shafts and switching mechanism to drive either one of the output shafts and to lock the other one.

It is an object of the invention to provide a drive unit offering farther possibilities.

For this purpose the invention provides a drive unit including the features of the characterising features of claim 1.

Preferably the transmission means is a gear mechanism, and in particularly a planetary gear mechanism.

The planetary gear mechanism is a very compact mechanism enabling different transmission paths. Such planetary gear mechanism does not require displacement of gear wheels or shafts in order to make a shift between the drive shafts. This enables stable bearings for the shafts.

Preferably the gear mechanism comprises two different gear trains and wherein the switch mechanism including the locking member is a movable non-rotatable gear which is movable to be selectively in engagement with one gear train to lock it and out of engagement with the other gear train to allow it to transmit motion to the respective output shaft.

This is a very simple switch mechanism, which serves as a locking member at the same time so that no separate locking member is necessary.

In case of a planetary gear mechanism comprising a sun wheel, planet wheels,a satellite wheel and a planet wheel carrier gear, the output shafts are preferably in an engagement with the sun wheel and the planet wheel carrier gear, respectively, while the electric motor is in engagement with the satellite wheel. In this embodiment it is preferred, that the movable non-rotatable gear is selectively in engagement with the sun wheel and the planet wheel carrier gear, respectively.

The invention also relates to a roof assembly for a vehicle according to claim 9, comprising at plurality of movable parts and a drive unit as described above.

The invention will hereafter be elucidated with reference to the drawing.
Fig. 1 is a very schematic longitudinal section of a vehicle comprising the roof assembly and drive unit according to the invention.
Fig. 2 is a schematic perspective view of a first embodiment of the drive unit, on a larger scale.
Fig. 3 and 4 are perspective views of the drive unit of Fig. 2 from a slightly different angle, in two different switching positions and without drive cables.
Fig. 5 is very schematic side view of an embodiment of the drive unit according to the invention.

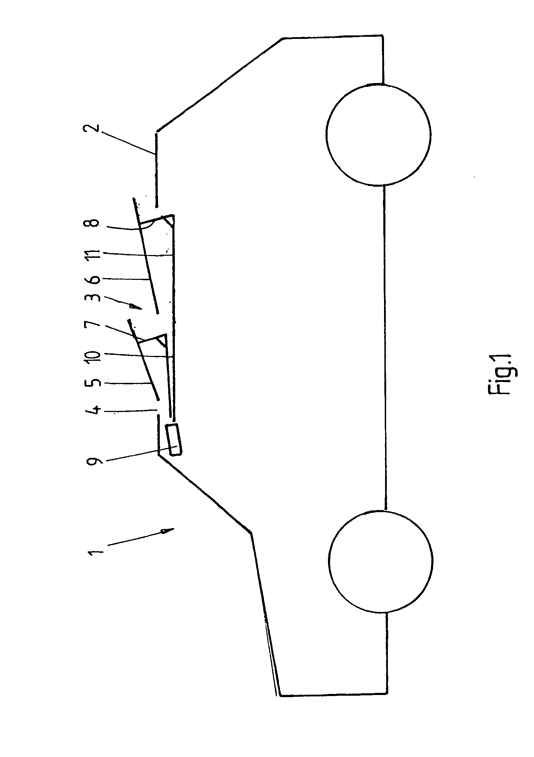

Fig. 1 shows very schematically a vehicle 1 having a roof 2, which includes a roof assembly 3 for selectively opening and closing at least one roof opening 4. For this purpose, the roof assembly 3 comprises at least two closures, in this case two panels 5 and 6 which may be moved independently of each other to open and close parts of one large common roof opening or separate smaller roof openings. The movements of the panels 5 and 6 may consist of translations, rotations or the like and these movements are effected by means of operating mechanisms 7 and 8 for the panels 5 and 6, respectively. A drive unit 9 is provided to drive the operating mechanisms 7 and 8, in this case through drive cables 10 and 11 for each operating mechanism 7 and 8. In general, the panels 5 and 6 each comprise two operating mechanisms 7 and 8, one on each side of the vehicle and in that case there are also two sets of drive cables 10 and 11, but only one drive unit 9.

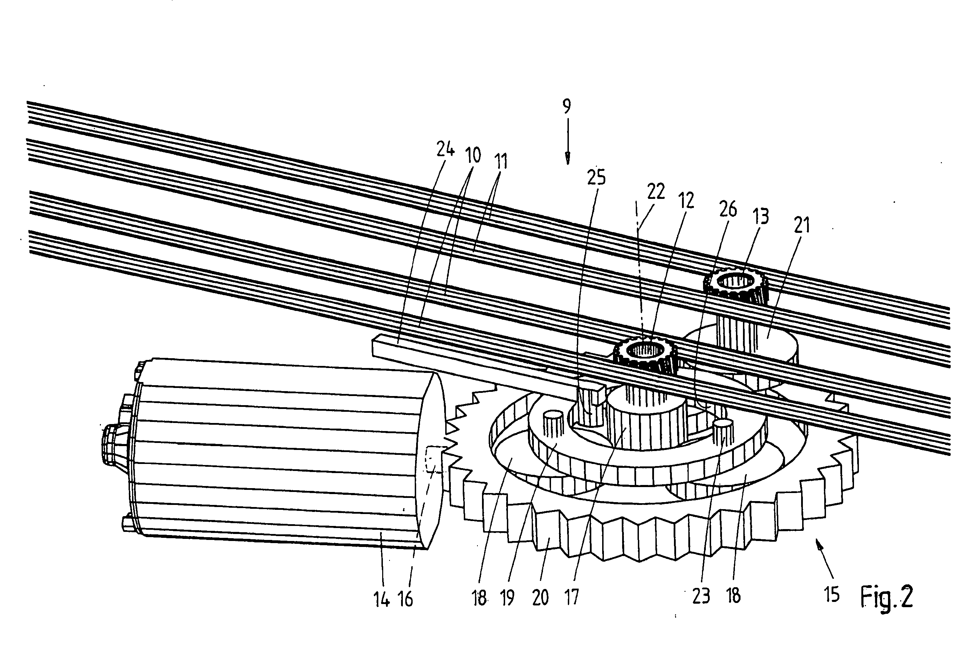

The drive unit 9 is shown in more detail in Figs. 2-4. Fig. 2 shows the sets of drive cables 10 and 11 each driven by an output shaft 12, 13, respectively of the drive unit 9.

According to the invention, these two output shafts 12, 13 are driven by one drive motor, in this case an electric motor 14. Between the output shafts 12, 13 and the electric motor 14 a transmission means 15 is arranged enabling the output shafts 12, 13 to be selectively driven by the electric motor 14. The electric motor 14 has an output shaft 16 which is in engagement with the transmission means 15, for example by means of a worm/worm wheel transmission.

In the embodiment shown, the transmission means 15 is a planetary gear mechanism including a sun wheel 17, three planet wheels 18, a planet wheel carrier gear 19 and a satellite wheel 20. The electric motor output shaft 16 is in engagement with the satellite wheel and the output shaft 12 is attached to or in engagement with the sun wheel 17. The output shaft 13 is in engagement with the planet wheel carrier gear 19, in this case by means of a gear wheel 21 on the output shaft 13 which is in engagement with external gear teeth on the planet wheel carrier gear 19. The output shaft 12 is directly mounted on the shaft of the sun wheel 17. The sun wheel 17 has a stationary axis of rotation 22 whereas the shafts or axes 23 of the planet wheels 18 are journaled in the planet wheel carrier gear 19. The satellite wheel 20 is in engagement with the planet wheels 18 by means of an inner toothing. Other arrangements are conceivable.

A switch mechanism comprises a movable, in this case a translatable switching member 24 carrying a non-rotatable gear 25. The switching member 24 is movable between a first position in which it is in engagement with the sun wheel 17 and a second position in which the gear 25 is in engagement with an inner toothing 26 of the planet wheel carrier gear 19. Because the gear 25 cannot rotate, the wheel which is engaged by the gear 25 of the switching member 24 will be locked and consequently the fixed gear 25 of the switching member 24 acts as a locking member.

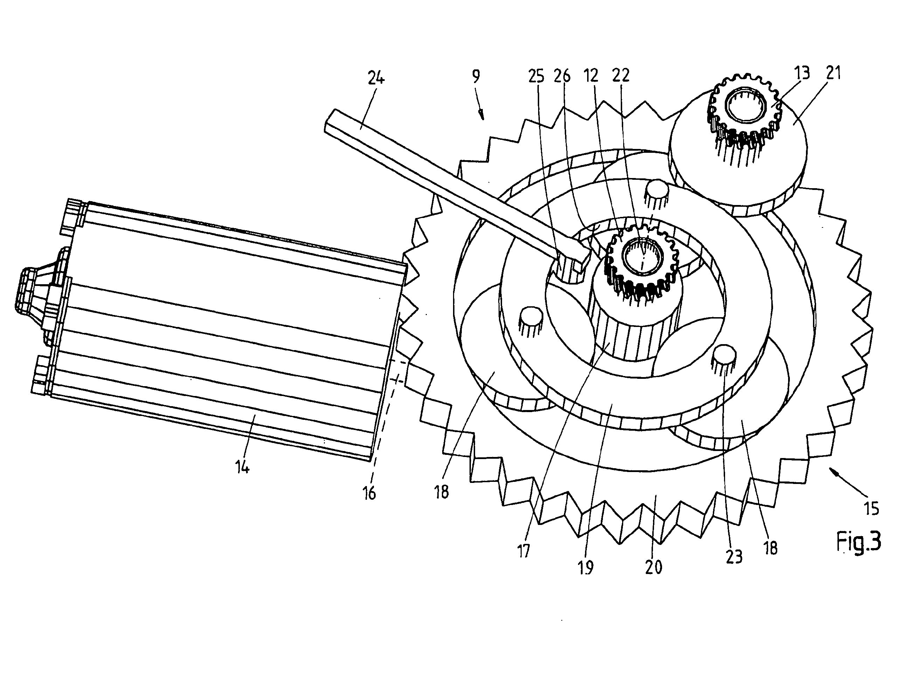

In Figs. 2 and 3, the switching member 24 is shown in its second position in which the gear 25 in engagement with the inner toothing 26 of the planet wheel carrier gear 19, so that this planet wheel carrier gear 19 is kept stationary and the planet wheels 18 will rotate around a stationary shaft 23. In this position, if the electric motor 14 is driven, the satellite wheel 20 will be rotated and will drive the planet wheels 18 around their stationary shaft 23, thereby rotating the sun wheel 17 and as a result the first output shaft 12. Since the planet wheel carrier gear 19 is locked by the gear 25 of the switching member 24, the second output shaft 13, which is engagement with the planet wheel carrier gear 19, will be locked as well. Thus, in this position, the first output shaft 12 will be driven with a certain transmission ratio by the electric motor 14, whereas the second output shaft 13 is locked in a fixed position.

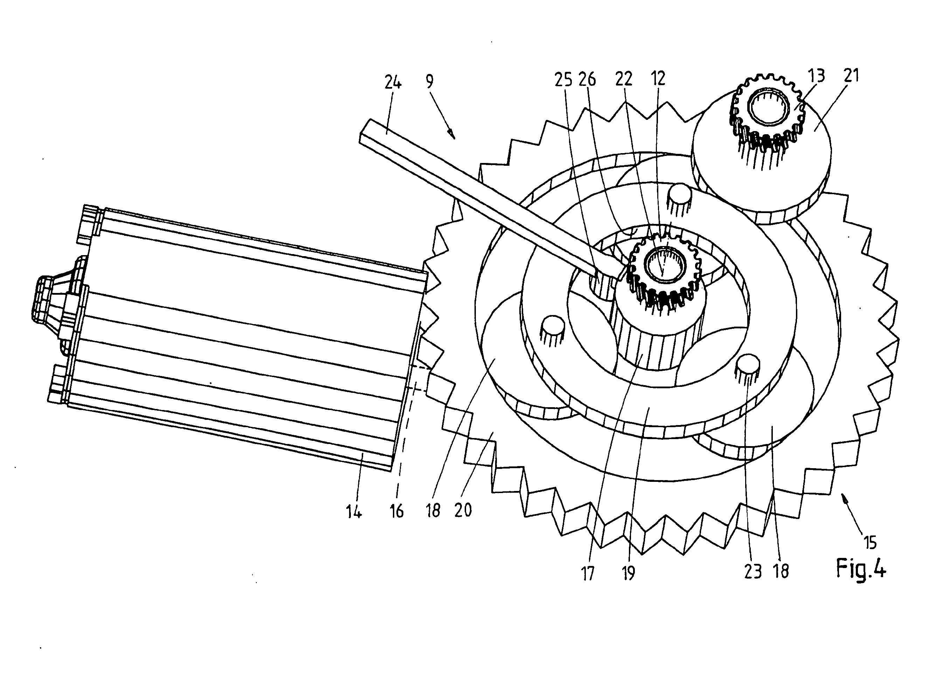

Fig. 4 shows a second switching position of the switching member 24, in which the non-rotatable gear 25 is in engagement with the sun wheel 17. As a result, the first output shaft 12 on the sun wheel 17 will be locked. If in this position, the electric motor 14 drives the satellite wheel 20 the satellite wheels 20 are forced to evolve around the sun wheel 17 thereby rotating the planet wheel carrier gear 19. This planet wheel carrier gear 19 will drive the second output shaft 13 through the gear wheel 21. The transmission ratio between the electric motor 14 and the second output shaft 14 may be equal to or differ from the transmission ratio of the output shaft 12.

By means of the transmission means 15 of the drive unit 9 shown in Figs. 2-4 it is possible to selectively drive one of the output shafts 12, 13 and lock the other one.

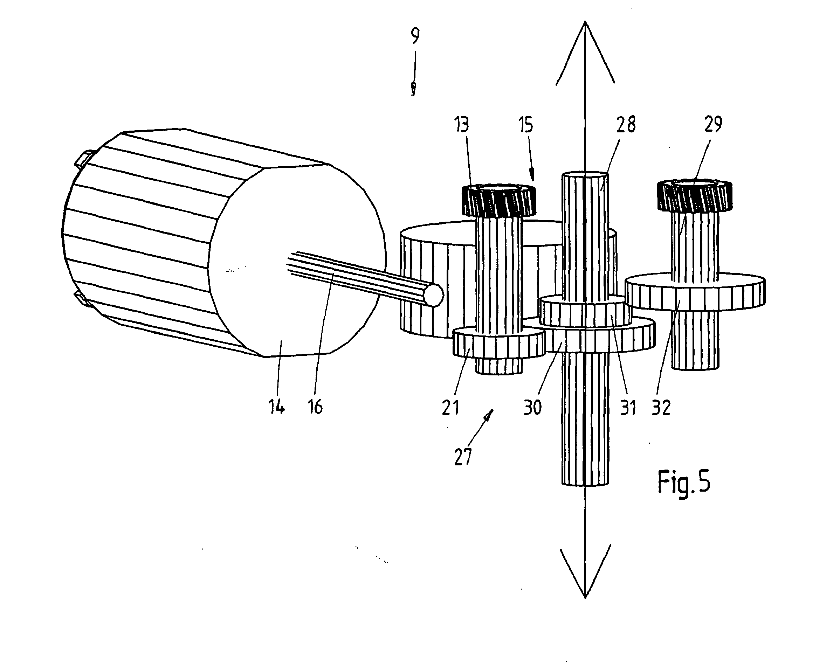

Fig. 5 shows an embodiment of the drive unit 9 according to the invention in which, in addition to the transmission means 15, there is an auxiliary transmission means 27, in this case placed between the transmission means 15 and the output shaft 13 and gear wheel 21 of the first embodiment. Instead of the output shaft 13 and the gear wheel 21, a switching shaft 28 is constantly in engagement with for example the planet wheel carrier gear 19. On the other hand, the switching shaft 28 is selectively in engagement with either the second output shaft 13 or a third output shaft 29. In this embodiment, the switching shaft 28 comprises a first gear wheel 30 adapted to engage the gear wheel 21 of the second output shaft 13 and a second gear wheel 31 adapted to engage a further gear wheel 32 on the third output shaft 29. The gear wheels 30 and 31 have different diameters and therefore the second and third output shafts 13, 29 are driven with different speed.

Of course, many more variations are possible. For example, the switching shaft 28 may be adapted such that either the second output shaft 13, the third output shaft 29 or both shafts 13 and 29 are in engagement with the switching shaft 28 so that two roof assembly parts may be driven at the same time. Also further output shafts may be added.

From the foregoing it will be clear that the invention provides a drive unit which is very functional but nonetheless comprises only one drive motor and therefore may have a compact configuration and be cost effective. The switching member is very effective and not only switches, but also locks the output shaft which is not driven. It will be understood that the roof assembly may comprise more than one drive unit.

## Claims

1. Drive unit (9) for at least two movable parts (5, 6) of a vehicle (1), in particular closures for selectively opening and closing at least one roof opening (4) in a roof assembly (3), comprising an electric motor (14) having a drive shaft (16) and transmission means (15), said transmission means having at least a first output shaft (12) and a second shaft (28) and a switch mechanism (24) including a locking member in order to selectively allow one of the shafts (12, 28) to be driven by the electric motor and to lock the other of the shafts (28, 12), **characterized by** an auxiliary transmission means (27) adapted to drive at least two further output shafts (13, 29) and including the second shaft as a switching shaft (28) in constant engagement with the transmission means (15) and having at least two output gears (30, 31) and being switchable to bring said output gears selectively in engagement with one or more of the further output shafts (13, 29)

2. Drive unit according to claim 1, wherein the transmission means (15) is a gear mechanism.

3. Drive unit according to claim 2, wherein the gear mechanism includes a planetary gear mechanism.

4. Drive unit according to claim 2 or 3, wherein the gear mechanism comprises two different gear trains and wherein the switch mechanism (24) including the locking member (25) is a movable non-rotatable gear which is movable to be selectively in engagement with one gear train to lock it and out of engagement with the other gear train to allow it to transmit motion to the respective output shaft (12, 13, 29).

5. Drive unit according to claims 3 and 4, wherein the planetary gear mechanism (15) comprises a sun wheel (17), planet wheels (18), a satellite wheel (20) and a planet wheel carrier gear (19), the output shafts (12, 13, 29) being in engagement with the sun wheel and the planet wheel carrier gear, respectively, while the electric motor (14) is in engagement with the satellite wheel (20).

6. Drive unit according to claim 5, wherein the movable non-rotatable gear (5) is selectively in engagement with the sun wheel (17) and the planet wheel carrier gear (19), respectively.

7. Drive unit according to one of the preceding claims, wherein the transmission ratios between the separate output shafts (12, 13, 29) and the electric motor (14) are different.

8. Drive unit according to one of the preceding claims, wherein the output shafts (12, 13) are adapted to engage drive cables (10, 11) which are operatively connected to the movable parts (5, 6) of the vehicle roof (2).

9. Roof assembly (3) for a vehicle (1), comprising a plurality of movable parts (5, 6), in particular closures for selectively opening and closing at least one roof opening in the vehicle, and a drive unit (9) according to one of the preceding claims.

## Patentansprüche

1. Antriebseinheit (9) für wenigstens zwei bewegliche Teile (5, 6) eines Fahrzeugs (1), insbesondere Verschlüsse zum selektiven Öffnen und Schließen wenigstens einer Dachöffnung (4) in einer Dachstruktur (3), aufweisend: einen Elektromotor (14), der eine Antriebswelle (16) und Übertragungsmittel (15) aufweist, wobei die Übertragungsmittel wenigstens eine erste Abtriebswelle (12) und eine zweite Welle (28) sowie einen Schaltmechanismus (24) aufweisen, welcher ein Verrieglungselement hat zum selektiven Ermöglichen, dass eine der Wellen (12, 28) durch den Elektromotor angetrieben wird und die andere der Wellen (28, 12) verriegelt wird, **gekennzeichnet durch** ein Zusatzübertragungsmittel (27), das eingerichtet ist zum Antreiben von wenigstens zwei zusätzlichen Abtriebswellen (13, 29) und das die zweite Welle als eine Schaltwelle (28) aufweist, die in konstantem Eingriff mit den Übertragungsmitteln (15) ist und die wenigstens zwei Abtriebsritzel (30, 31) aufweist und die verlagerbar ist zum selektiven Ineingriffbringen der Abtriebsritzel mit einer oder mehreren der zusätzlichen Abtriebswellen (13, 29).

2. Antriebseinheit gemäß Anspruch 1, wobei das Übertragungsmittel (15) ein Getriebemechanismus ist.

3. Antriebseinheit gemäß Anspruch 2, wobei der Getriebemechanismus einen Planetengetriebemechanismus aufweist.

4. Antriebseinheit gemäß Anspruch 2 oder 3, wobei der Getriebemechanismus zwei unterschiedliche Getriebezüge aufweist, und wobei der das Verriegelungselement (25) aufweisende Schaltmechanismus (24) ein bewegbares, nicht drehbares Zahnrad ist, welches bewegbar ist, so dass es selektiv in Eingriff mit einem Getriebezug ist zum Verriegeln dessen und außer Eingriff mit dem anderen Getriebezug ist, so dass dieser Bewegung an die jeweilige Abtriebswelle (12, 13, 29) übertragen kann.

5. Antriebseinheit gemäß den Ansprüchen 3 und 4, wobei der Planetengetriebemechanismus (15) ein Sonnenrad (17), Planetenräder (18), ein Satellitenrad (20) und ein Planetenrad-Trägerzahnrad (19) aufweist, wobei die Abtriebswellen (12, 13, 29) in Eingriff mit dem Sonnenrad bzw. dem Planetenrad-Trägerzahnrad sind, wohingegen der Elektromotor (14) in Eingriff mit dem Satellitenrad (20) ist.

6. Antriebseinheit gemäß Anspruch 5, wobei das bewegbare, nicht drehbare Zahnrad (5) selektiv in Eingriff mit dem Sonnenrad (17) bzw. dem Planetenrad-Trägerzahnrad (19) ist.

7. Antriebseinheit gemäß einem der vorhergehenden Ansprüche, wobei die Übersetzungsverhältnisse zwischen den separaten Abtriebswellen (12, 13, 29) und dem Elektromotor (14) unterschiedlich sind.

8. Antriebseinheit gemäß einem der vorhergehenden Ansprüche, wobei die Abtriebswellen (12, 13) eingerichtet sind zum Eingriff mit Antriebsseilen (10, 11), welche mit den bewegbaren Teilen (5, 6) des Fahrzeugdachs (2) wirkverbunden sind.

9. Dachstruktur (3) für ein Fahrzeug (1), mit einer Mehrzahl von bewegbaren Teilen (5, 6), insbesondere Verschlüssen zum selektiven Öffnung und Schließen wenigstens einer Dachöffnung in dem Fahrzeug, und einer Antriebseinheit (9) gemäß einem der vorhergehenden Ansprüche.

## Revendications

1. Unité d'entraînement (9) pour au moins deux parties mobiles (5, 6) d'un véhicule (1), en particulier des fermetures pour ouvrir et fermer sélectivement au moins une ouverture de toit (4) dans un ensemble de toit (3), comprenant un moteur électrique (14) muni d'un arbre de commande (16) et de moyens de transmission (15), lesdits moyens de transmission ayant au moins un premier arbre de sortie (12) et un second arbre (28) et un mécanisme de commutation (24) comprenant un élément de blocage afin de permettre l'entraînement sélectif de l'un des arbres (12, 28) par le moteur électrique et de bloquer l'autre des arbres (28, 12), **caractérisé par** des moyens de transmission auxiliaires capables de commander au moins deux autres arbres de sortie (13, 29) et comprenant le second arbre en tant qu'arbre de commutation (28) en engagement constant avec les moyens de transmission (15) et comportant au moins deux engrenages de sortie (30, 31) et pouvant être commuté pour mettre lesdits engrenages de sortie sélectivement en engagement avec un ou plusieurs des autres arbres de sortie (13, 29).

2. Unité d'entraînement selon la revendication 1, dans laquelle les moyens de transmission (15) sont constitués par un mécanisme d'engrenage.

3. Unité d'entraînement selon la revendication 2, dans laquelle le mécanisme d'engrenage comprend un mécanisme d'engrenage planétaire.

4. Unité d'entraînement selon la revendication 2 ou 3, dans laquelle le mécanisme d'engrenage comprend deux trains d'engrenage différents et dans lequel le mécanisme de commutation (24) comprenant l'élément de blocage (25) est un engrenage mobile non rotatif qui est mobile de façon à être sélectivement en engagement avec un train d'engrenage pour le bloquer et hors engagement avec l'autre train d'engrenage pour lui permettre de transmettre le mouvement à l'arbre de sortie respectif (12, 13, 29).

5. Unité d'entraînement selon les revendications 3 et 4, dans laquelle le mécanisme d'engrenage planétaire (15) comprend une roue solaire (17), des roues planétaires (18), une roue satellite (20) et un engrenage de support de roue planétaire (19), les arbres de sortie (12, 13, 29) étant en engagement avec la roue solaire et l'engrenage de support de roue planétaire, respectivement, tandis que le moteur électrique (14) est en prise avec la roue satellite (20).

6. Unité d'entraînement selon la revendication 5, dans laquelle l'engrenage mobile non rotatif (5) est sélectivement en prise avec la roue solaire (17) et l'engrenage de support de roue planétaire (19), respectivement.

7. Unité d'entraînement selon l'une des revendications précédentes, dans laquelle les rapports de transmission entre les arbres de sortie séparés (12, 13, 29) et le moteur électrique (14) sont différents.

8. Unité d'entraînement selon l'une des revendications précédentes, dans laquelle les arbres de sortie (12, 13) sont aptes à engager les câbles d'entraînement (10, 11) qui sont reliés fonctionnellement aux parties mobiles (5, 6) du toit du véhicule (2).

9. Ensemble de toit (3) pour un véhicule (1), comprenant une pluralité de pièces mobiles (5, 6), en particulier des fermetures pour ouvrir et fermer sélectivement au moins une ouverture de toit dans le véhicule, et une unité d'entraînement (9) selon l'une des revendications précédentes.
